# EUROPÄISCHE PATENTSCHRIFT

(11) **EP 0 944 488 B1**
(45) Veröffentlichungstag und Bekanntmachung des Hinweises auf die Patenterteilung: **19.12.2001**
(21) Anmeldenummer: 97943837.1
(22) Anmeldetag: 06.09.1997
(51) Int. Cl.: B60J 10/10, B60J 10/00

(54) **DICHTUNGSSYSTEM FÜR DEN DACHRAHMEN EINES HARDTOPS ODER COUPES ODER EINES FALTVERDECKS**
SEALING SYSTEM FOR THE ROOF FRAME OF A HARD-TOP, COUPE OR CONVERTIBLE
SYSTEME D'ETANCHEITE POUR CADRE DE TOIT DE CABRIOLET, DE COUPE OU DE DECAPOTABLE

(30) Priorität: 19.12.1996 DE 29621997 U
(43) Veröffentlichungstag der Anmeldung: 29.09.1999
(73) Patentinhaber: METEOR GUMMIWERKE K.H. BÄDJE GMBH & CO., 31167 Bockenem (DE)
(72) Erfinder: BUCHHOLZ, Hans-Volker, D-31137 Hildesheim (DE); ANDERS, Jens, D-31094 Marienhagen (DE)
(74) Vertreter: Kosel, Peter, Dipl.-Ing.
(86) Internationale Anmeldenummer: EP9704836
(87) Internationale Veröffentlichungsnummer: WO9826949

(56) Entgegenhaltungen:
- EP-A- 0 521 611
- DE-A- 4 038 694
- DE-C- 3 644 283
- DE-C- 4 344 373
- DE-U- 29 509 880
- FR-A- 2 613 414

## Beschreibung

Die Erfindung betrifft ein Dichtungssystem nach dem Oberbegriff des Anspruchs 1.

Bei einem bekannten und gattungsbildenden Dichtungssystem dieser Art (DE 295 09 880 U1, Fig. 7) sind nur an freie Längskanten der Schenkel der aus Kunststoff formgespritzten Armierung Elastomerdichtlippen angespritzt, die einerseits ständig mit dem Stoff eines Faltverdecks und andererseits beim Schlieβen eines Fensters mit dessen Seitenflächen in Dichtberührung stehen. Ein stirnseitiger Abschluß dieses Dichtungsprofils ist nicht offenbart.

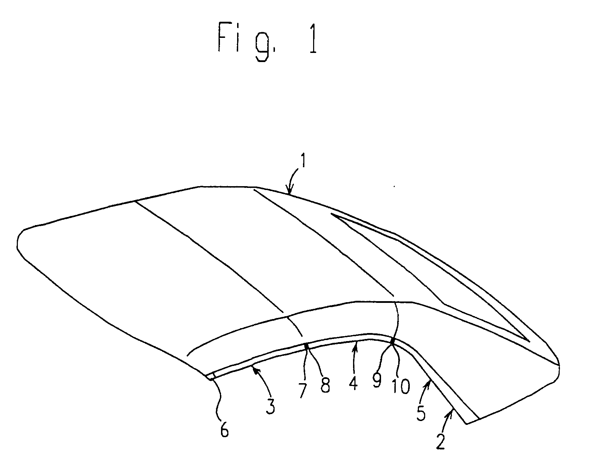

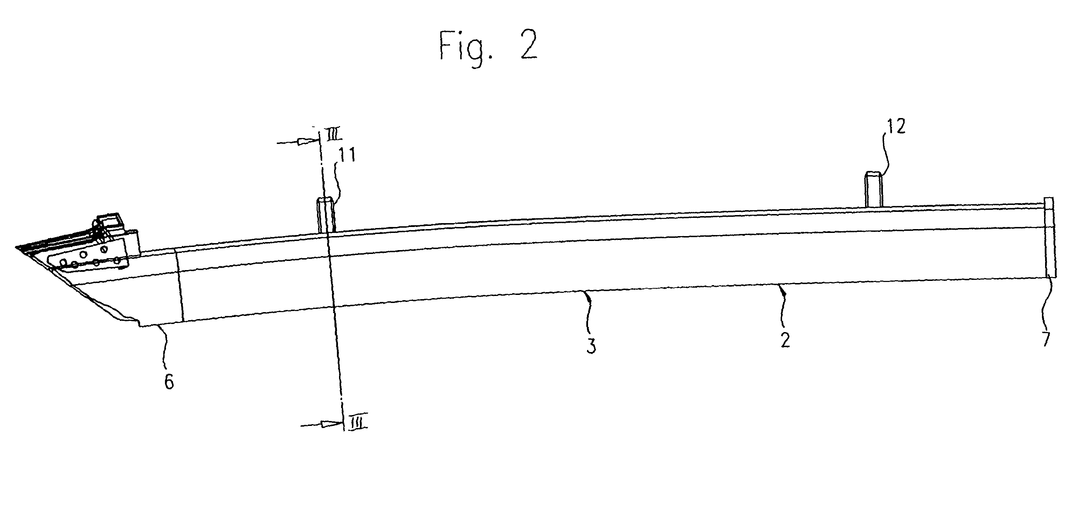

Aus der DE 43 20 330 A1, Fig. 2, ist ein mit einer Schnappverbindung schließbares Dichtungssystem an sich bekannt, dessen Armierung aus Metall oder Kunststoff bestehen kann. Das Dichtungssystem verläuft auch in eingebautem Zustand (Fig. 1) gerade und ist deshalb durch Koextrusion hergestellt und abgelängt worden. Das Ablängen verschmutzt die stirnseitigen Enden, die vor ihrem Konfektionieren aufwendig gereinigt werden müssen.

In der DE 36 44 283 C1 sind die Kugelpfanne und das komplementäre, kugelkalottenförmige Endstück nicht an die offenen Stirnseiten der gegenüberliegenden Dichtungsabschnitte angeformt. Vielmehr sollen diese Teile durch Kleben oder Vulkanisieren mit den Dichtungsabschnitten verbunden werden. Diese Verbindungsarten bedeuten einen zusätzlichen, wirtschaftlich nachteiligen Arbeitsgang.

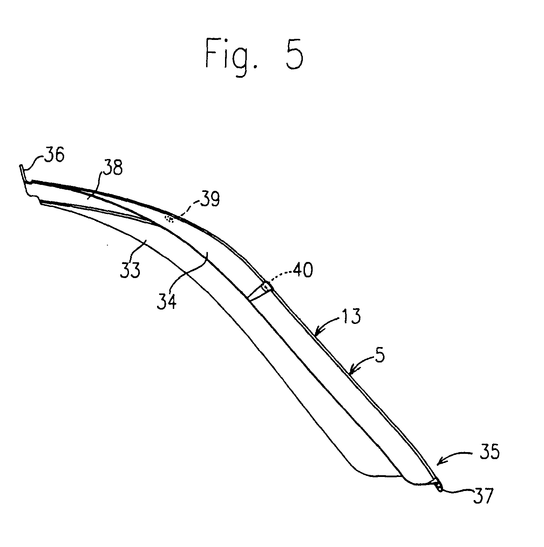

Aus der DE 43 44 373 C1 ist es an sich bekannt, bei einem Kabrio-Verdeck aufeinanderfolgende Hohlprofildichtungen jeweils an den einander gegenüberliegenden Stirnseiten mit sogenannten Dichtköpfen zu versehen. Im geschlossenen Zustand des Faltdaches oder Verdecks liegen jeweils benachbarte Dichtköpfe unter Druckvorspannung dichtend aneinander an. Gemäß Spalte 4, Zeile 29 bis 31, sind die Dichtköpfe jeweils an die stirnseitigen Enden der Hohlprofildichtungen angeformt. In der Schrift ist allerdings nicht offenbart, wie dieses Anformen geschehen soll. Offenbar handelt es sich bei den Hohlprofildichtungen um extrudierte Profile, die nach dem Anformen der Dichtköpfe nur zweidimensional verformt und verlegt werden. Dieses Verformen findet in einem weiteren, zusätzlichen Arbeitsgang dadurch statt, daß die Hohlprofildichtungen in eine metallische Dichtschiene "eingeknöpft" werden, wie dies im einzelnen aus Fig. 5 ersichtlich ist. Die metallische Dichtschiene wird zuvor in einem gesonderten Montagevorgang mit Befestigungselementen an der Dachschale oder an einem Dachrahmenteil montiert.

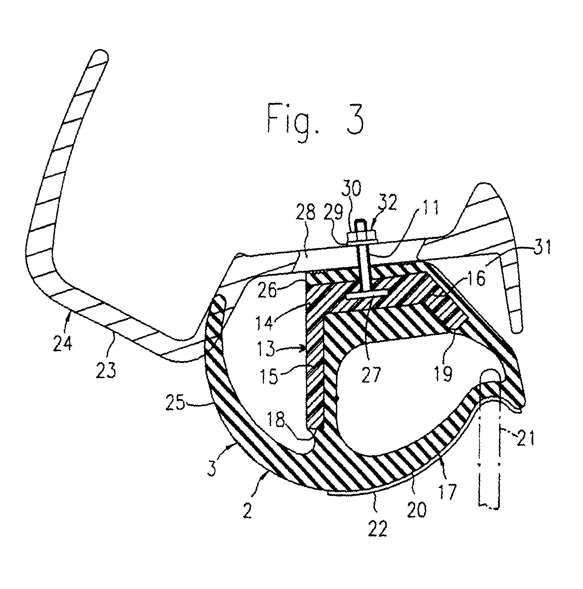

Aus der EP 0 521 611 A1 ist es an sich bekannt, zunächst ein metallisches Halteprofil in nicht näher dargestellter Weise am Dachrahmen des Kraftfahrzeugs zu montieren. Anschließend wird ein extrudiertes Dichtprofil in die Halteschiene "eingeknöpft". Bei einem Kabrio gemäß Fig. 3 sind die einzelnen Abschnitte des Dichtungssystems jeweils an den einander zugewandten Stirnseiten mit einer Moosgummikappe versehen. Benachbarte Moosgummikappen werden bei geschlossenem Verdeck (Fig. 3) dichtend aneinandergepreßt. In der Anmeldung ist nicht offenbart, wie die Moosgummikappen an das Dichtungsprofil angebracht werden.

Aus der FR 2 613 414 A1 ist es an sich bekannt, ein verhältnismäßig hartes Einsatzprofil gesondert herzustellen und in einem besonderen Arbeitsschritt mit dem Dichtungsprofil zu verknöpfen. Das so hergestellte Kombinationsprofil wird anschließend über Befestigungselemente mit dem Karosserieblech verbunden.

In der DE 40 38 694 A1 werden besonders gestaltete Endstücke an Schlauchabschnitte anvulkanisiert. Die Endstücke sollen aber nicht die Stirnseiten der Schlauchabschnitte im Sinne einer Endkappe dicht verschließen. Vielmehr soll der Innenraum jedes Schlauchabschnitts in die Stirnfläche des zugehörigen Endstücks münden.

Der Erfindung liegt die Aufgabe zugrunde, die Maß- und Formgenauigkeit dreidimensional geformter Dichtungsprofilabschnitte einschließlich ihrer wenigstens einen Endkappe zu verbessern und ihre Herstellung zu vereinfachen.

Diese Aufgabe ist durch die Merkmale des Anspruchs 1 gelöst. Das Dichtungssystem kann einteilig oder mehrteilig ausgebildet sein, also z.B. für ein Hardtop oder ein Coupé nur einen, von der A-Säule bis einschließlich der C-Säule durchlaufenden Dichtungsprofilabschnitt, oder für das Faltverdeck eines Kabrioletts mehrere Dichtungsprofilabschnitte aufweisen. Die vorgefertigte Armierung läßt sich auch in kompliziertester dreidimensionaler Formgebung sehr maß- und formgenau herstellen. Mit gleicher Genauigkeit kann anschließend in dem Formwerkzeug der Profilstrang aus wenigstens einem Elastomer und außerdem die wenigstens eine Endkappe angeformt werden. Der fertige Dichtungsprofilabschnitt kann grundsätzlich ohne nachträgliche Verformung in das zugehörige Kraftfahrzeug eingebaut werden. Jede derartige Verformung würde unerwünschte Spannungen in dem Dichtungsprofilabschnitt erzeugen und die Gefahr einer nicht mehr perfekten Abdichtung durch den Profilstrang heraufbeschwören. Dennoch ist der fertige Dichtungsprofilabschnitt in Grenzen flexibel, um Toleranzen an der Einbaustruktur während der Montage ausgleichen zu können. Die gleichzeitige Anformung der wenigstens einen Endkappe an den Dichtungsprofilabschnitt spart einen gesonderten Arbeitsgang und fördert die Maß- und Paßgenauigkeit des fertigen Dichtungsprofilabschnitts.

Die Merkmale des Anspruchs 2 oder 3 führen zu einer besonders schnellen und sicheren Montage des Dichtungsprofilabschnitts.

Gemäß Anspruch 4 läßt sich eine besonders einfache und günstige Abdichtung der Seitenscheibe im oberen Bereich des Dachrahmens mit Ausnahme des C-Säulenabschnitts erreichen.

Die Merkmale des Anspruchs 5 dienen der zusätzlichen Abdichtung des Anschlußteils.

Gemäß Anspruch 6 läßt sich der Dichtungsprofilabschnitt während der Montage schnell und sicher justieren.

Die Merkmale des Anspruchs 7 führen zu einer einwandfreien Abdichtung auch im kritischen C-Säulenabschnitt. Hier kann die Armierung schon vor dem Aufbringen des Profilstrangs Durchbrechungen für Befestigungselemente aufweisen, mit denen der C-Säulenabschnitt schließlich an dem Dachrahmen montiert wird. Mit diesen Durchbrechungen können Öffnungen in dem Profilstrang fluchten. Diese Öffnungen können vorzugsweise während des Anformens des Profilstrangs an die Armierung in dem Formwerkzeug mit eingeformt werden. Durch diese Maßnahmen wird die Montage des Dichtungsprofilabschnitts erleichtert. Durch die Vergrößerung der Schenkelhöhe der Armierung und damit des fertigen Dichtungsprofilabschnitts zu seinem unteren Ende hin läßt sich die Seitenscheibe auch in diesem kritischen Bereich der C-Säule sicher abdichten und führen.

Gemäß Anspruch 8 kann im oberen Endbereich des C-Säulenabschnitts auf eine Art Schlauchprofil übergegangen werden, das sich auch vorzugsweise an dem angrenzenden oberen Abschnitt des Dachrahmens befindet. In diesem oberen Endbereich des C-Säulenabschnitts können die Dichtlippen z.B. durch Vulkanisierung aneinander befestigt werden.

Die Ausbildung gemäß Anspruch 9 spart einerseits Elastomermaterial und schafft andererseits eine gute Montagebasis für die Befestigungselemente.

Durch die Merkmale des Anspruchs 10 kann die Armierung verhältnismäßig dünnwandig und daher kostengünstig ausgebildet sein. Dennoch sorgt das Stützprofil auch bei verhältnismäßig großer Schenkelhöhe des Dichtungsprofilabschnitts für eine formgenaue Einbaulage des Dichtungsprofilabschnitts in allen Betriebszuständen.

Gemäß Anspruch 11 erhält man zusätzliche Biege- und Verwindungssteifigkeit für die Armierung und damit für das gesamte Dichtungssystem. Bei gleicher Festigkeit kann das Grundprofil der Armierung dünnwandiger ausgeführt und dadurch Material gespart werden.

Die Merkmale jedes der Ansprüche 12 bis 15 führen je nach Bedarf zu der gewünschten Versteifung der Armierung. Vorzugsweise sind die Längsrippen an die Basis der Armierung angeformt und befinden sich die Querrippen in einem Abstand von z.B. 5 bis 30 mm voneinander.

Diese und weitere Merkmale und Vorteile der Erfindung werden nachfolgend anhand der in den Zeichnungen dargestellten Ausführungsbeispiele näher erläutert. Es zeigt:
Fig. 1 eine perspektivische Ansicht schräg von oben auf ein Faltverdeck eines Kabrioletts,
Fig. 2 eine Seitenansicht eines oberen, vorderen Dichtungsprofilabschnitts des Dichtungssystems,
Fig. 3 die Schnittansicht nach Linie III-III in Fig. 2 in vergrößerter Darstellung,
Fig. 4 eine Seitenansicht eines oberen, hinteren Dichtungsprofilabschnitts des Dichtungssystems,
Fig. 5 eine Seitenansicht einer Armierung für den C-Säulenabschnitt des Dichtungssystems,
Fig. 6 eine Seitenansicht des fertigen C-Säulenabschnitts des Dichtungssystems mit eingeformter Armierung gemäß Fig. 5,
Fig. 7 die Schnittansicht nach Linie VII-VII in Fig. 6 in vergrößerter Darstellung,
Fig. 8 einen Querschnitt entsprechend Fig. 3 durch eine andere Ausführungsform und
Fig. 9 einen Querschnitt entsprechend Fig. 7 durch eine weitere Ausführungsform.

Fig. 1 zeigt ein Faltverdeck 1 eines Kabrioletts, dessen Dachrahmen auf jeder Seite mit einem dreiteiligen Dichtungssystem 2 versehen ist. Jedes Dichtungssystem 2 weist einen vorderen, oberen Dichtungsprofilabschnitt 3, einen hinteren, oberen Dichtungsprofilabschnitt 4 und einen C-Säulenabschnitt 5 auf. Die Abschnitte 3 bis 5 sind jeweils an Anschlußteilen des zugehörigen Verdeckgestänges befestigt. Der Abschnitt 3 weist angeformte Endkappen 6 und 7, der Abschnitt 4 angeformte Endkappen 8 und 9 und der Abschnitt 5 an seinem oberen Ende eine angeformte Endkappe 10 auf.

In allen Zeichnungsfiguren sind gleiche Teile mit gleichen Bezugszahlen versehen.

Gemäß Fig. 2 weist der Abschnitt 3 zwei im Abstand voneinander angeordnete, als Schraubenbolzen ausgebildete Halteorgane 11 und 12 auf, deren unteres Ende jeweils in einer Armierung 13 (Fig. 3) des Abschnitts 3 verankert ist.

In Fig. 3 sind Einzelheiten des vorderen, oberen Dichtungsprofilabschnitts 3 verdeutlicht. Zusätzlich ist die Einbausituation gezeigt.

Bei der Armierung 13 handelt es sich um ein Kunststoffspritzgießteil von im wesentlichen U-förmigem Querschnitt mit einer Basis 14 und daran seitlich angeformten Schenkeln 15 und 16. Die Armierung 13 wird dreidimensional durch Spritzgießen vorgeformt und dann in ein Formwerkzeug eingelegt. In dem Formwerkzeug wird an die Armierung 13 ein Profilstrang 17 aus wenigstens einem Elastomer angeformt.

Der Profilstrang 17 weist ein sich über freie Längskanten 18 und 19 der Schenkel 15, 16 der Armierung 13 hinaus erstreckendes, in Umfangsrichtung geschlossenes Schlauchprofil 20 auf. Das Schlauchprofil 20 kann an seiner mit einer Scheibe 21 in Berührung tretenden Außenfläche mit einer an sich bekannten Schicht 22 aus Gleitlack oder einer Beflockung versehen sein. An das Schlauchprofil 20 ist eine sich seitlich erstreckende, mit einem Anschlußteil 23 des in diesem Fall als Verdeckgestänge ausgebildeten Dachrahmens 24 abdichtend zusammenwirkende Dichtlippe 25 angeformt. Die Dichtlippe 25 ist in Fig. 3 in ihrer entspannten, nicht aktiven Lage gezeichnet.

Der Profilstrang 17 weist außerdem eine Bodenschicht 26 auf, welche die Basis 14 auf ihrer dem Anschlußteil 23 zugewandten Seite überdeckt.

Das Halteorgan 11 ist mit einem Fuß 27 in der Basis 14 der Armierung 13 drehfest verankert. Ein Schraubenbolzen des Halteorgans 11 erstreckt sich durch die Bodenschicht 26 und eine Montageöffnung 28 des Anschlußteils 23 hindurch. Die Montageöffnung 28 ist als Langloch ausgebildet, dessen Längsachse sich quer zu einer Längsachse des Dichtungssystems 2 erstreckt. So kann der Abschnitt 3 bei der Montage quer zu seiner Längsachse eingestellt und dann über eine Unterlegscheibe 29 und eine Mutter 30 in der gewünschten Betriebsposition fixiert werden. Dabei wird die Bodenschicht 26 abdichtend an das Anschlußteil 23 angepreßt. Der Abschnitt 3 erstreckt sich in einen Aufnahmekanal 31 des Anschlußteils 23. Jedes Halteorgan 11, 12 und die zugehörige Unterlegscheibe 29 und Mutter 30 bilden ein Befestigungselement 32 für das Dichtungsprofil 2.

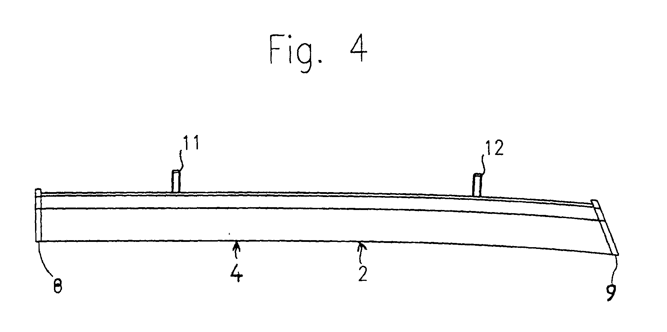

In Fig. 4 sind Einzelheiten des hinteren, oberen Dichtungsprofilabschnitts 4 gezeigt. Auch der Abschnitt 4 ist mit zwei Halteorganen 11, 12 in der gleichen Weise wie der Abschnitt 3 gemäß den Fig. 2 und 3 versehen. Die Querschnittsgestaltung des Abschnitts 4 gleicht der in Fig. 3 gezeigten Querschnittsgestaltung des Abschnitts 3.

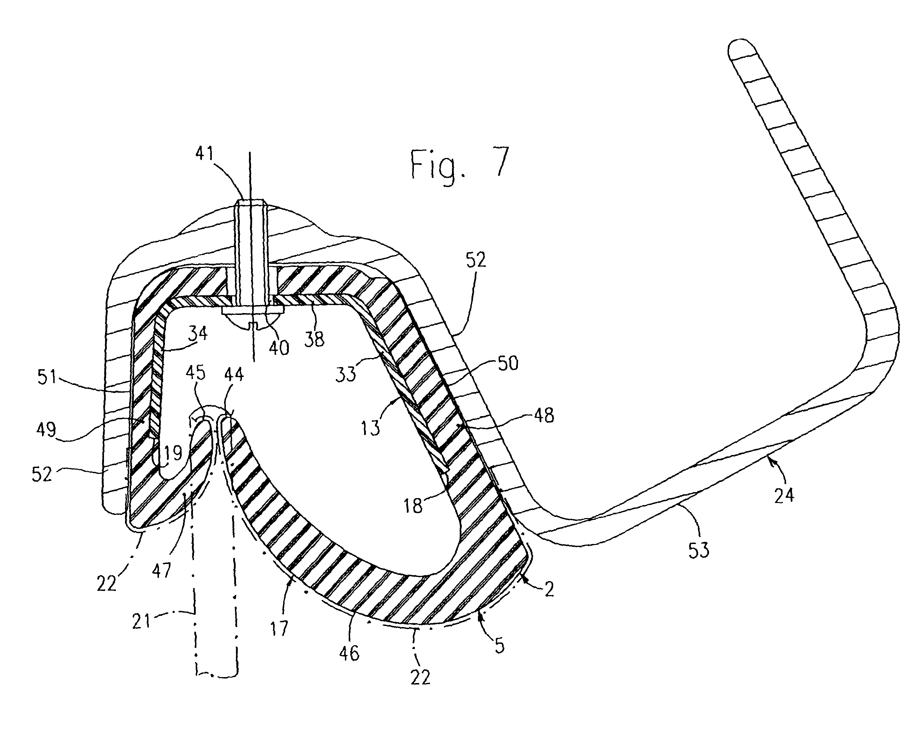

Fig. 5 zeigt die verhältnismäßig dünnwandige Ausbildung der Armierung 13 für den C-Saulenabschnitt 5. Es ist zu erkennen, daß sich die Höhe von Schenkeln 33 und 34 der Armierung 13 über die Länge der Armierung 13 zu einem unteren Endbereich 35 des C-Säulenabschnitts 5 hin vergrößert. Die Armierung 13 trägt oben eine nach oben abgewinkelte Montagelasche 36 und unten eine Montagelasche 37. Ferner sind in einer Basis 38 der Armierung 13 Durchbrechungen 39 und 40 für Befestigungselemente 41 (Fig. 7) eingeformt.

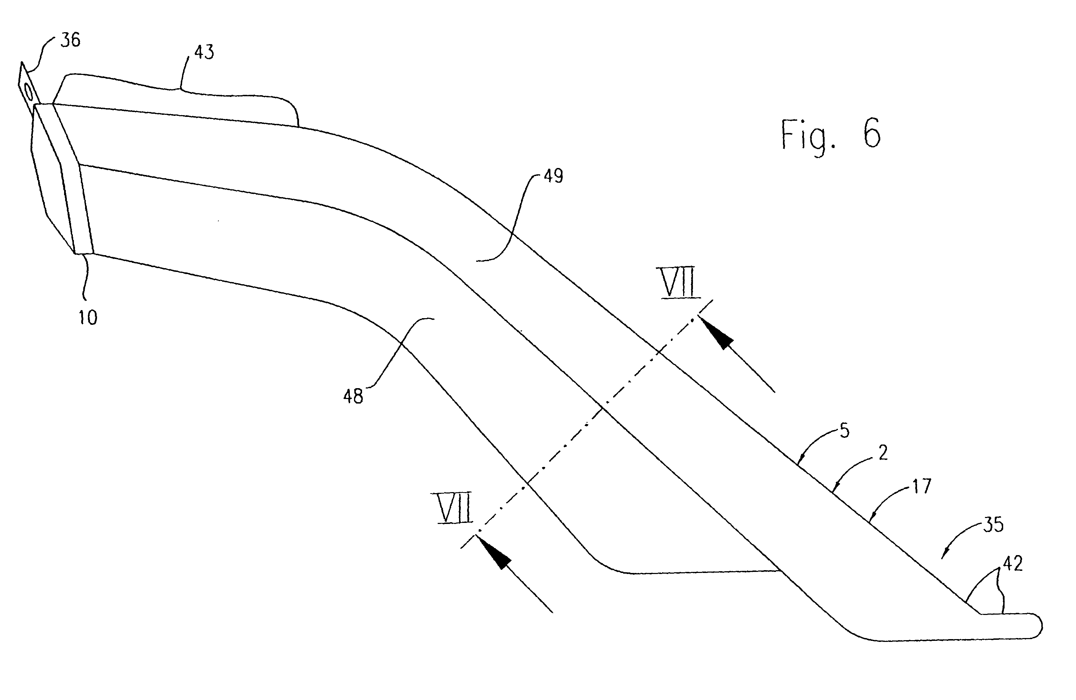

Die Armierung 13 gemäß Fig. 5 wird aus Kunststoff in einem Spritzgießverfahren hergestellt und dann in ein Formwerkzeug eingelegt und mit wenigstens einem Elastomer umspritzt. Bei diesem Bearbeitungsvorgang wird gleich die Endkappe 10 mit angespritzt, deren scheibenförmige Ausbildung besonders deutlich aus Fig. 6 erkennbar ist.

Fig. 6 zeigt den fertigen C-Säulenabschnitt 5 des Dichtungssystems 2 mit dem auf die Armierung 13 (Fig. 5) aufgeformten Profilstrang 17 aus wenigstens einem Elastomer und, wie erwähnt, mit der angeformten Endkappe 10. In dem unteren Endbereich 35 des C-Säulenabschnitts 5 ist ein Endstück 42 des Profilstrangs 17 angeformt. Das Endstück 42 dient dem dichten Anschluß an ein benachbartes, nicht dargestelltes Dichtungsprofil. In einem oberen Endbereich 43 des Abschnitts 5 sind freie Längskanten 44 und 45 (Fig. 7) von Dichtlippen 46 und 47 des Profilstrangs 17 aneinander dicht befestigt. In dem oberen Endbereich 43 entsteht auf diese Weise ein schlauchähnliches Profilstrangstück.

Gemäß Fig. 6 weist der Profilstrang 17 an die Schenkel 33, 34 (Fig. 5) angeformte Schenkel 48, 49 des Profilstrangs 17 auf.

In Fig. 7 ist erkennbar, daß die Lippen 46, 47 auf ihrer der Scheibe 21 zugewandten Seite mit der besonders gleitfähigen Schicht 22 belegt sind. Seitenflächen 50 und 51 der Schenkel 48, 49 sind durch ein Stützprofil 52 des zugehörigen Anschlußteils 53 des Dachrahmens 24 gestützt. So kann es trotz der verhältnismäßig dünnwandigen Ausbildung der Armierung 13 im montierten Zustand des C-Säulenabschnitts 5 nicht zu unerwünschten Formänderungen des C-Säulenabschnitts 5 kommen.

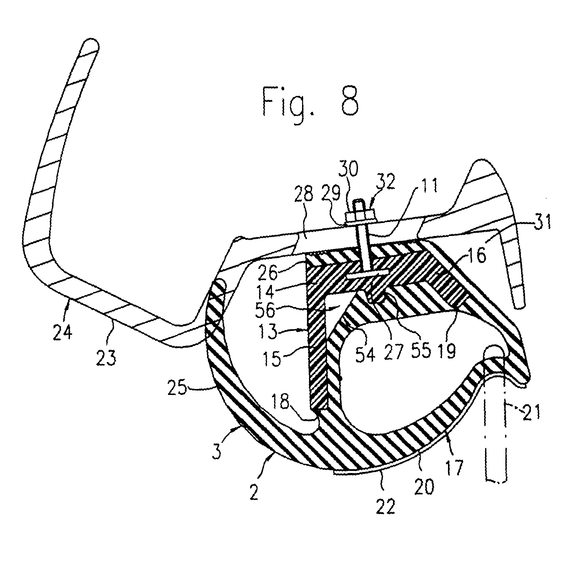

Gegenüber der Ausführungsform nach Fig. 3 unterscheidet sich diejenige nach Fig. 8 dadurch, daß die Armierung 13 zur Erhöhung ihrer Steifigkeit und Formstabilität mit Versteifungsrippen 54 und 55 ausgestattet ist. Die Versteifungsrippen 54, 55 sind jeweils in einem Innenraum 56 des im wesentlichen U-förmigen Querschnitts der Armierung 13 angeordnet.

Bei den Versteifungsrippen 54 handelt es sich um Querrippen, die sich in einer Querrichtung der Armierung 13 erstrecken und in einer Längsrichtung der Armierung 13 in einem Abstand voneinander und parallel zueinander angeordnet sind. Dieser Abstand der Querrippen 54 voneinander wird je nach Bedarf für den jeweiligen Einsatzfall optimal gewählt. Die Dicke der Querrippen ist etwa gleich der Dicke des Schenkels 15. Bei Anordnung solcher Querrippen 54 kann die Dicke des Schenkels 13 geringer ausfallen als ohne solche Querrippen. Jede Querrippe 54 erstreckt sich von dem Schenkel 15 bis zu der Basis 14 der Armierung 13.

Dagegen ist die Versteifungsrippe 55 als sich in der Längsrichtung der Armierung 13 erstreckende Längsrippe ausgebildet. Die Längsrippe 55 ist an die Basis 14 der Armierung 13 angeformt. Alle Versteifungsrippen 54, 55 erhöhen den Biege- und Torsionswiderstand der Armierung 13 und damit des Dichtungsprofilabschnitts 3.

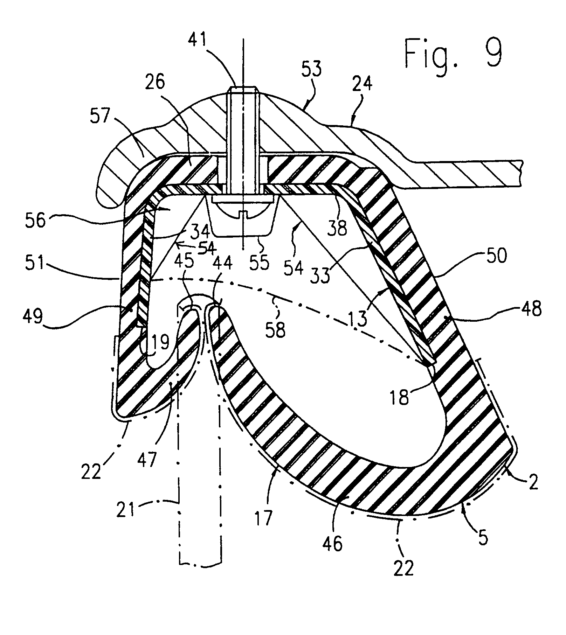

Das Ausführungsbeispiel nach Fig. 9 modifiziert dasjenige gemäß Fig. 7. An die Stelle des Stützprofils 52 in Fig. 7 ist in Fig. 9 ein Halteprofil 57 des zugehörigen Anschlußteils 53 des Dachrahmens 24 getreten. Das Halteprofil 57 gibt der Bodenschicht 26 und der Basis 38 Halt. Die Schenkel 33, 34; 48, 49 des C-Säulenabschnitts 5 sind durch die Versteifungsrippen 54, 55 dermaßen verstärkt, daß eine seitliche äußere Führung der Schenkel durch die Seitenwangen des Stützprofils 52 gemäß Fig. 7 entbehrlich ist.

In Fig. 9 ist die Längsrippe 55 nur an denjenigen Stellen unterbrochen, an denen sich die Befestigungselemente 41 befinden. Zu beiden Seiten der Längsrippe 55 erstrecken sich Querrippen 54 von der Basis 38 bis zu den Schenkeln 33, 34. In Fig. 9 ist strichpunktiert auch die untere Begrenzungskante einer als Querrippe ausgebildeten Versteifungsrippe 58 eingezeichnet. Die Querrippe 58 erstreckt sich von der freien Längskante 18 des Schenkels 33 in Verbindung mit der Basis 38 bis zu dem anderen Schenkel 34 der Armierung 13. Auf diese Weise bildet die Versteifungsrippe 58 eine besonders steife Membran im Innenraum 56 der Armierung 13. In Längsrichtung der Armierung 13 sind auch in diesem Fall mehrere solche Querrippen 58 in günstigem Abstand voneinander angeordnet.

Als Elastomere für den Profilstrang 17 können z.B. folgende Stoffe eingesetzt werden:
Moosgummi einer Härte von 10 bis 30 Shore-A oder Weichgummi einer Härte von 30 bis 70 Shore-A, beide z.B. hergestellt aus EPDM, SBR, CR, EC0, Verschnitten (Abmischungen) von EPDM mit SBR mit einem EPDM-Gewichtsanteil von 20 bis 90 %, Verschnitten von EPDM mit SBR und/oder Polyoctenamer, oder NBR.
Einsetzbar sind z.B. auch folgende thermoplastischen Elastomere (TPE):
   TPE auf Basis Styrol Ethylen Butylen Styrol (SEB-S),
   TPE auf Basis Styrol Butylen Styrol (SBS),
   TPE auf Basis Styrol Isopren Styrol (SIS),
   TPE auf der Basis von Elastomerlegierungen als TP0-Blends oder TP0-Alloys, z.B. von vernetztem EPDM/Propylen-Blend (EPDM/PP) oder
      Ethylenvinylacetat/Vinylidenchlorid (EVA/PVDC) oder TPE auf der Basis von thermoplastischen Polyurethanen (TPU); TP0 ist das Kurzzeichen für thermoplastische Polyolefin(Elastomer)e.
Der Profilstrang 17 kann auch aus mehreren der zuvor erwähnten Elastomere geformt und anschließend entlang den miteinander in Berührung stehenden Grenzflächen aneinander vulkanisiert werden. Dann besteht zwischen den einzelnen Teilen des Profilstrangs 17 jeweils ein chemischer Verbund von ausreichender Festigkeit.
Die Armierung 13 besteht dagegen aus einem thermoplastischen Kunststoff. Dafür kommen z.B. folgende Stoffe in Betracht:
   PPE Polyphenylenether,
   PP Polypropylen,
   PE (LDPE, low density PE),
   PE (HDPE, high density PE),
   PIB Polyisobutylen,
   PS Polystyrol,
   PA Polyamid,
   PC Polycarbonat,
   PETP Polyethylenterephthalat,
   POM Polyoxymethylen,
      Epoxyharze,
      Phenolformaldehydharze,
   PES Polyester,
   PP0 Polyphenylether,
   PVP Polyvinylchlorid oder
   Modifikationen dieser thermoplastischen Kunststoffe.

Diese Kunststoffe können mit oder ohne Verstärkung, z.B. durch Kohle- oder Glasfasern oder durch Mineralien (Talkum), verwendet werden.

Zwischen dem Profilstrang 17 und der Armierung 13 kann noch eine Schicht aus einem Kupplungsmaterial angeordnet sein (nicht dargestellt). Das Kupplungsmaterial hat dann die Aufgabe, den chemischen Verbund zwischen dem Elastomer des Profilstrangs 17 und dem thermoplastischen Kunststoff der Armierung 13 zu verbessern. Als Kupplungsmaterial kommen z.B. folgende Stoffe in Betracht:
EPDM im Verschnitt mit PP, PE, PS, PIB, PES, sowie anderen Polymeren aus der vorerwähnten Aufstellung der Stoffe der Armierung 13 in Gewichtsanteilen < 20 %,
Verschnittene EPDM - CR - SBR - Polyoctenamer oder EPDM-Compounds mit Harzbeimengungen (z.B. Epoxyharzen) oder andere marktübliche Haftvermittler

Wenn der Profilstrang 17 aus einem TPE besteht, kommt als Kupplungsmaterial z.B. ein Polypropylenprimer in Betracht.

## Patentansprüche

1. Dichtungssystem (2) mit wenigstens einem Dichtungsprofilabschnitt (3, 4, 5) für den Dachrahmen (24) eines Hardtops oder Coupés oder eines Faltverdecks für ein Kabriolett,
wobei jeder Dichtungsprofilabschnitt (3, 4, 5) einen durch eine Armierung (13) verstärkten Profilstrang (17) aus wenigstens einem Elastomer aufweist,
wobei die Armierung (13) als vorgefertigtes Kunststoffspritzgußteil ausgebildet und in einem Formwerkzeug zumindest auf einem Teil seiner Oberfläche mit dem Profilstrang (17) umspritzt wurde,
wobei die Armierung (13) auf ihrer zumindest annähernd gesamten Länge einen im wesentlichen U-förmigen Querschnitt aufweist,
und wobei das Dichtungssystem (2) dreidimensional geformt und an Anschlußteilen (23; 53) des Dachrahmens (24) mit Befestigungselementen (32; 41) festlegbar ist,
**dadurch gekennzeichnet, daß** an wenigstens eine Stirnseite jedes Dichtungsprofilabschnitts (3,4,5) in dem Formwerkzeug eine Endkappe (6 bis 10) mit angespritzt wurde.

2. Dichtungssystem nach Anspruch 1,
**dadurch gekennzeichnet, daß** an der Armierung (13) wenigstens zwei Halteorgane (11, 12) der Befestigungselemente (32) im Abstand voneinander befestigt sind,
und daß bei der Montage jedes Dichtungsprofilabschnitts (3, 4, 5) jedes Halteorgan (11, 12) durch eine Montageöffnung (28) des zugehörigen Anschlußteils (23) hindurchsteckbar und relativ zu dem Anschlußteil (23) axial festlegbar ist.

3. Dichtungssystem nach Anspruch 2,
**dadurch gekennzeichnet, daß** jedes Halteorgan (11, 12) als durch eine Mutter (30) axial festlegbarer Schraubenbolzen ausgebildet ist.

4. Dichtungssystem nach Anspruch 2 oder 3,
**dadurch gekennzeichnet, daß** der Profilstrang (17) ein sich über freie Längskanten (18, 19) von Schenkeln (15, 16) der Armierung (13) hinaus erstreckendes, in Umfangsrichtung geschlossenes Schlauchprofil (20) aufweist.

5. Dichtungssystem nach Anspruch 4,
**dadurch gekennzeichnet, daß** an das Schlauchprofil (20) eine sich seitlich erstreckende, mit dem Anschlußteil (23) abdichtend zusammenwirkende Dichtlippe (25) angeformt ist.

6. Dichtungssystem nach einem der Ansprüche 2 bis 5,
**dadurch gekennzeichnet, daß** jede Montageöffnung (28) als Langloch ausgebildet ist,
und daß sich eine Längsachse des Langlochs quer zu einer Längsachse des zugehörigen Dichtungsprofilabschnitts (3, 4, 5) erstreckt.

7. Dichtungssystem nach Anspruch 1,
wobei bei einem C-Säulenabschnitt (5) des Dichtungssystems (2) der Profilstrang (17) sich über freie Längskanten (18, 19) von Schenkeln (33, 34) der Armierung (13) hinaus erstreckende Dichtlippen (46, 47) aufweist,
und wobei die Dichtlippen (46, 47) mit ihren freien Längskanten (44, 45) einander zugewandt sind und mit einer rahmenlosen Seitenscheibe (21) des Kraftfahrzeugs abdichtend zusammenwirken,
**dadurch gekennzeichnet, daß** die Höhe der Schenkel (33, 34) der Armierung (13) sich über die Länge der Armierung (13) zu einem unteren Endbereich (35) des C-Säulenabschnitts (5) hin vergrößert.

8. Dichtungssystem nach Anspruch 7,
**dadurch gekennzeichnet, daß** die freien Längskanten (44, 45) der Dichtlippen (46, 47) in einem oberen Endbereich (43) des C-Säulenabschnitts (5) aneinander dicht befestigt sind.

9. Dichtungssystem nach Anspruch 7 oder 8,
**dadurch gekennzeichnet, daß** die Armierung (13) auf einer Innenfläche frei von dem Profilstrang (17) ist.

10. Dichtungssystem nach Anspruch 7 bis 9,
**dadurch gekennzeichnet, daß** Seitenflächen (50, 51) des montierten Dichtungssystems (2) durch ein Stützprofil (52) des zugehörigen Anschlußteils (53) des Dachrahmens (24) gestützt sind.

11. Dichtungssystem nach einem der Ansprüche 1 bis 10,
**dadurch gekennzeichnet, daß** die Armierung (13) in einem Innenraum (56) ihres im wesentlichen U-förmigen Querschnitts mit wenigstens einer Versteifungsrippe (54;55;58) versehen ist.

12. Dichtungssystem nach Anspruch 11,
**dadurch gekennzeichnet, daß** die wenigstens eine Versteifungsrippe (55) als sich in einer Längsrichtung der Armierung (13) erstreckende Längsrippe ausgebildet ist.

13. Dichtungssystem nach Anspruch 11 oder 12,
**dadurch gekennzeichnet, daß** die Versteifungsrippen (54;58) als sich in einer Querrichtung der Armierung (13) erstreckende, in einer Längsrichtung der Armierung (13) in einem Abstand voneinander angeordnete Querrippen ausgebildet sind.

14. Dichtungssystem nach Anspruch 13,
**dadurch gekennzeichnet, daß** jede Querrippe (54) sich von einem Schenkel (15;16;33;34) der Armierung (13) bis zu einer Basis (14;38) der Armierung (13) erstreckt.

15. Dichtungssystem nach Anspruch 13,
**dadurch gekennzeichnet, daß** jede Querrippe (58) sich von einem Schenkel (33) der Armierung (13) in Verbindung mit einer Basis (38) der Armierung (13) bis zu einem anderen Schenkel (34) der Armierung (13) erstreckt.

## Claims

1. Sealing system (2) comprising at least one sealing profiled section (3, 4, 5) for the roof frame (24) of a hardtop or coupé or a folding soft top for a convertible,
wherein each sealing profiled section (3, 4, 5)comprises a profile strip (17) of at least one elastomer which is reinforced by a reinforcement (13),
wherein the reinforcement (13) is formed as a prefabricated injection-moulded plastics material part and, in a moulding tool, has had the profile strip (17) moulded around at least a part of its external surface,
wherein the reinforcement (13) has an essentially U-shaped cross-section over at least approximately its entire length,
and wherein the sealing system (2) is three-dimensional and is arranged to be secured to connecting pieces (23; 53) of the roof frame (24) by fastening members (32; 41),
**characterized in that** an end cap (6 to 10) has been moulded onto at least one end face of each sealing profiled section (3, 4, 5) in the moulding tool.

2. Sealing system according to claim 1,
**characterized in that** at least two retaining members (11, 12) of the fastening members (32) are fixed to the reinforcement (13) spaced from one another,
and that in the fitting of each sealing profiled section (3, 4, 5) each retaining member (11, 12) is pushed through a fitting hole (28) of the associated connecting piece (23) and is axially fixed relative to the connecting piece (23).

3. Sealing system according to claim 2,
**characterized in that** each retaining member (11, 12) is formed as a screw bolt which is axially securable by a nut (30).

4. Sealing system according to claim 2 or 3,
**characterized in that** the profile strip (17) comprises a tubular profile (20) which is closed in the circumferential direction and which extends out over free longitudinal edges (18, 19) of legs (15, 16) of the reinforcement (13).

5. Sealing system according to claim 4,
**characterized in that** on the tubular profile (20) there is formed a sealing lip (25) which extends laterally and cooperates sealingly with the connecting piece (23).

6. Sealing system according to one of claims 2 to 5,
**characterized in that** each fitting hole (28) is an elongate hole,
and that a longitudinal axis of the elongate hole extends transversely to a longitudinal axis of the associated sealing profiled section (3, 4, 5).

7. Sealing system according to claim 1,
wherein for a C-pillar section (5) of the sealing system (2) the profile strip (17) comprises sealing lips (46, 47) extending out over free longitudinal edges (18, 19) of legs (33, 34) of the reinforcement (13),
and wherein the sealing lips (46, 47) have their free longitudinal edges (44, 45) facing one another and cooperating sealingly with a frameless sideglass (21) of the motor vehicle,
**characterized in that** the height of the legs (33, 34) of the reinforcement (13) increases over the length of the reinforcement (13) down to a lower end region (35) of the C-pillar section (5).

8. Sealing system according to claim 7,
**characterized in that** the free longitudinal edges (44, 45) of the sealing lips (46, 47) are fixed tightly against one another in an upper end region (43) of the C-pillar section (5).

9. Sealing system according to claim 7 or 8,
**characterized in that** the reinforcement (13) on an inner surface is free from the profile strip (17).

10. Sealing system according to claims 7 to 9,
**characterized in that** side faces (50, 51) of the fitted sealing system (2) are supported by a supporting profile (52) of the associated connecting piece (53) of the roof frame (24).

11. Sealing system according to one of claims 1 to 10,
**characterized in that** the reinforcement (13) is provided with at least one stiffening rib (54; 55; 58) in an internal chamber (56) of its substantially U-shaped cross-section.

12. Sealing system according to claim 11,
**characterized in that** the at least one stiffening rib (55) is formed as a longitudinal rib extending in a longitudinal direction of the reinforcement (13).

13. Sealing system according to claim 11 or 12,
**characterized in that** the stiffening ribs (54; 58) are formed as transverse ribs arranged spaced from one another in a lengthwise direction of the reinforcement (13) and extending in a transverse direction relative to the reinforcement (13).

14. Sealing system according to claim 13,
**characterized in that** each transverse rib (54) extends from a leg (15; 16; 33; 34) of the reinforcement (13) to a base (14; 38) of the reinforcement (13).

15. Sealing system according to claim 13,
**characterized in that** each transverse rib (58) is connected to a base (38) of the reinforcement (13) and extends from a leg (33) of the reinforcement (13) as far as another leg (34) of the reinforcement (13).

## Revendications

1. Système d'étanchéité (2) comportant au moins une partie de profilé d'étanchéité (3, 4, 5) pour le cadre de toit (24) d'un hardtop ou coupé ou d'une capote pour un cabriolet,
chaque partie de profilé d'étanchéité (3, 4, 5) comportant un cordon profilé (17), renforcé par une armature (13), en au moins un élastomère,
l'armature (13) étant formée d'une pièce préfabriquée en matière synthétique moulée par injection et étant extrudée avec le cordon profilé (17) dans un outil de formage au moins sur une partie de sa surface,
l'armature (13) présentant sur au moins presque toute sa longueur une section transversale ayant essentiellement la forme d'un U,
le système d'étanchéité (2) étant formé en trois dimensions et pouvant être fixé à des pièces de raccordement (23; 53) du cadre de toit (24) par des éléments de fixation (32; 41),
**caractérisé en ce que**, sur au moins un côté frontal de chaque partie de profilé d'étanchéité (3, 4, 5), un cache d'extrémité (6 à 10) a été extrudé en même temps dans l'outil de formage.

2. Système d'étanchéité selon la revendication 1,
**caractérisé en ce que**, sur l'armature (13), sont fixés à distance les uns des autres au moins deux organes de maintien (11, 12) des éléments de fixation (32),
et **en ce que**, lors du montage de chaque partie du profilé d'étanchéité (3, 4, 5), chaque organe de maintien (11, 12) peut être encastré dans une ouverture de montage (28) de la pièce de raccordement (23) associée et fixé axialement par rapport à la pièce de raccordement ( 23).

3. Système d'étanchéité selon la revendication 2,
**caractérisée en ce que** chaque organe de maintien (11, 12) a la forme d'un boulon fileté qui peut être fixé axialement par un écrou (30).

4. Système d'étanchéité selon la revendication 2 ou 3,
**caractérisé en ce que** le cordon profilé (17) comporte un profilé en tuyau souple (20) fermé dans la direction de la périphérie, s'étendant par des arêtes longitudinales libres (18, 19) au-delà de bras (15, 16) de l'armature (13).

5. Système d'étanchéité selon la revendication 4,
**caractérisé en ce que** le profilé en tuyau souple (20) est venu de formage avec une lèvre d'étanchéité (25) s'étendant latéralement, coopérant avec la pièce de raccordement (23) pour assurer l'étanchéité.

6. Système d'étanchéité selon l'une des revendications 2 à 5,
**caractérisé en ce que** chaque ouverture de montage (28) a la forme d'un trou allongé,
et **en ce qu'**un axe longitudinal du trou allongé s'étend perpendiculairement à un axe longitudinal de la partie de profilé d'étanchéité associée (3, 4, 5).

7. Système d'étanchéité selon la revendication 1,
dans lequel, sur une partie d'une colonne C (5) du système d'étanchéité (2), le cordon profilé (17) comporte des lèvres d'étanchéité (46, 47) s'étendant sur des arêtes longitudinales libres (18, 19) de bras (33, 34) de l'armature (13),
et où les lèvres d'étanchéité (46, 47) sont tournées l'une vers l'autre avec leurs arêtes longitudinales libres (44, 45) et coopèrent avec une vitre latérale (21) sans cadre du véhicule à moteur pour assurer l'étanchéité,
**caractérisé en ce que** la hauteur des bras (33, 34) de l'armature (13) s'agrandit sur la longueur de l'armature (13) jusqu'à une zone d'extrémité inférieure (35) de la partie de la colonne C (5).

8. Système d'étanchéité selon la revendication 7,
**caractérisé en ce que** les arêtes longitudinales libres (44, 45) des lèvres d'étanchéité (46, 47) sont fixées l'une à l'autre en faisant étanchéité dans une zone d'extrémité supérieure (43) de la partie de la colonne C (5).

9. Système d'étanchéité selon la revendication 7 ou 8,
**caractérisé en ce que** une surface intérieure de l'armature (13) est dégagée par rapport au cordon profilé (17).

10. Système d'étanchéité selon l'une des revendications 7 à 9,
**caractérisé en ce que** des surfaces latérales (50, 51) du système d'étanchéité (2) monté sont soutenues par un profilé de soutien (52) de la pièce de raccordement associée (52) du cadre de toit (24).

11. Système d'étanchéité selon l'une des revendications 1 à 10,
**caractérisé en ce que** l'armature (13) est pourvue, dans un espace intérieur (56) de sa section transversale ayant essentiellement la forme d'un U, d'au moins une nervure de renforcement (54; 55; 58).

12. Système d'étanchéité selon la revendication 11,
**caractérisé en ce que** la nervure de renforcement (55) au nombre d'au moins une a la forme d'une nervure longitudinale s'étendant dans une direction longitudinale de l'armature (13).

13. Système d'étanchéité selon la revendication 11 ou 12,
**caractérisé en ce que** les nervures de renforcement (54; 58) ont la forme de nervures transversales s'étendant dans une direction transversale de l'armature (13), écartées les unes des autres dans une direction longitudinale de l'armature (13).

14. Système d'étanchéité selon la revendication 13,
**caractérisé en ce que** chaque nervure transversale (54) s'étend d'un bras (15; 16; 33; 34) de l'armature (13) jusqu'à une base (14; 38) de l'armature (13).

15. Système d'étanchéité selon la revendication 13,
**caractérisé en ce que** chaque nervure transversale (58) s'étend d'un bras (33) de l'armature (13) en liaison avec une base (38) de l'armature (13) jusqu'à un autre bras (34) de l'armature (13).
